# EUROPEAN PATENT SPECIFICATION

(11) **EP 0 693 869 B1**
(45) Date of publication and mention of the grant of the patent: **09.07.1997**
(21) Application number: 94913042.1
(22) Date of filing: 12.04.1994
(51) Int. Cl.: A01G 9/02, A01G 27/00

(54) **FLOWERPOT, ESPECIALLY FOR FORCING PLANTS WHILE USING AUTOMATIC WATERING**
PFLANZENTOPF, INSBESONDERE ZUM ZÜCHTEN VON PFLANZEN UNTER VERWENDUNG DER SELBSTTÄTIGEN BEWÄSSERUNG
POT DE FLEUR, CONNU SPECIALEMENT POUR FAIRE CROITRE LES PLANTES, EN UTILISANT L'ARROSAGE AUTOMATIQUE

(30) Priority: 13.04.1993 DK 422/93
(43) Date of publication of application: 31.01.1996
(73) Proprietor: OS PLASTIC A/S, 3520 Farum (DK)
(72) Inventor: HOUGAARD, Erling, DK-4040 Jyllinge (DK)
(74) Representative: Roerboel, Leif
(86) International application number: PCT/DK94/00147
(87) International publication number: WO 94/23560

(56) References cited:
- US-A- 5 010 687

## Description

### TECHNICAL FIELD

The present invention relates to a flowerpot of the kind set forth in the preamble of claim 1. A flowerpot of this kind appears from US Patent Specification No. 5.010.687.

### BACKGROUND ART

The prior art relating to automatic watering of flowerpot cultures in large-scale market-gardening establishments comprises the so-called bottom watering, as well as watering according to the flood/ebb principle using water levels being raised and lowered.

When using bottom watering, the flowerpots stand with their perforated bottoms on a water-conducting mat constantly being maintained in the wet state, so that the moisture can be absorbed into the pot from below.

With this method, there is a risk of a ventilation problem appearing at the lowermost part of the pot, because the bottom of the pot and the surface of the mat are in close mutual contact, possibly resulting in that the pot filling becomes acid or the roots of the plants rot.

When water levels being raised and lowered are used, the flowerpots are placed in flat-bottomed tanks with a plane bottom. The vessel is periodically filled and subsequently again drained of water according to the so-called flood/ebb principle. Compared to the bottom-watering method, the flood/ebb principle makes it possible to achieve an improved control of the proportioning of water and an improved control of the watering process according to desire, or depending on the specific conditions prevailing.

Even though this method implies that water is removed from the tank relatively quickly, this does not necessarily mean that also the lowermost part of the filling of the flowerpot will be freed of excess water sufficiently quickly. The removal of excess water is, however, a prerequisite for a good ventilation, especially of the lowermost region of the pot filling. On the other hand, the flood/ebb principle offers the possibility of good access for the air to the lowermost part of the pot, as the water is removed quickly from the region around the pot as described above.

It has already been suggested to improve the ventilation conditions by, as mentioned above, providing laterally outwardly facing openings in the lowermost end of the side walls of the flowerpots in the immediate vicinity of the pot bottom, said openings, in addition to letting in water, are to serve both for removing excess water from the pot filling and to give access for ventilating air to the lowermost part of the pot. Experience has shown, however, that the removal of excess water and the desired improvement of the ventilating conditions in many cases still had to be considered unsatisfactory.

In the flowerpot defined in the preamble of claim 1, two distinctly separate bottom regions are provided, each equipped with its own passage opening, so that one of the regions may advantageously be used for one of the watering methods, and the other region for the other watering method. One of the regions is accurately delimited by the channel-limiting side walls mentioned. This means that a region, likewise accurately defined, exists outside of the channels. Each of the regions mentioned has its own passage opening or openings. The channels make it possible to select an accurately defined limitation of the ventilation through the passage openings situated at a high level in the top wall of the channel to a region, the distance of which from the outside wall of the pot may be made larger or smaller according to desire. Further, it is possible to provide the other region of the pot bottom situated outside of the channels with a base-surface area depending on conditions, with which area the pot in the case of bottom watering may rest on the water-conducting mat over an area of such a size, that the mat is not compressed too much. Finally, the use of the channels mentioned imply a possibility of limiting the channel length according to desire, making it possible to avoid channel segments unnecessarily reducing the inner space in the pot available for receiving pot filling. The supporting legs serve to stabilize the pot's ability to remain standing.

Experience has shown that problems with the ventilation of the pot filling may arise in flowerpots of the kind set forth in the preamble of claim 1, when the plants are to be forced why using ebb/flood watering. Even though the watering is generally carried out in the desired manner through the channels and the second openings situated in the top walls, some water will also seep in or out through the first openings mentioned, provided in the bottom of the flowerpot. This seeping in and out will influence a bottom layer of the pot filling substantially situated in the region between the projections formed by the channels and protruding into the inside of the pot. Water seeping in through the first openings in the bottom will frequently not carry sufficient quantities of oxygen, and water seeping out through the same path will frequently not cause sufficient drying-out, to make it possible to avoid acidification of the lowermost bottom layer of the pot filling, inhibiting the development of the roots.

### DISCLOSURE OF THE INVENTION

It is the object of the present invention to provide a flowerpot of the kind referred to initially, with which it is possible to avoid this disadvantage by using the pot for ebb/flood watering, and this object is achieved with a flowerpot of said kind, which according to the present invention is characterized as set forth in claim 1. In this manner, at least one well-defined bottom area limited by supporting legs is provided, said area constituting a passage, along which seepage inwardly and outwardly through the first openings belonging to the bottom of the flowerpot is promoted, thus also promoting the oxidation, without disturbing the ability of the flowerpot to function with two methods of watering differing in principle.

An advantageous embodiment of the flowerpot according to the invention is set forth in claim 2. This embodiment makes it possible to utilize the channel characteristic of ebb/flood watering for the rapid supply of oxygenated water forwardly towards the first holes referred to in the bottom. When using these channels, it is possible to decide how far inwardly towards the middle of the pot bottom, measured from the side of the pot, such first openings may be placed without problems arising.

### BRIEF DESCRIPTION OF THE DRAWINGS

In the following detailed portion of the present description, the invention will be explained in more detail with reference to the drawings, in which
Figure 1 shows an embodiment of a flowerpot according to the invention, viewed from below,
Figure 2 is a sectional view taken along the line II-II in Figure 1,
Figure 3 is a sectional view taken along the line III-III in Figure 2,
Figure 4 shows a second embodiment of the flowerpot as viewed from below,
Figure 5 is a sectional view taken along the line V-V in Figure 4,
Figure 6 shows a third embodiment of the flowerpot as viewed from below,
Figure 7 is a sectional view taken along the line VII-VII in Figure 6,
Figure 8 is a view in the direction of the arrows VIII-VIII in Figure 7,
Figure 9 shows a fourth embodiment of the flowerpot as viewed from below,
Figure 10 is a sectional view taken along the line X-X in Figure 9, and
Figure 11 is a view in the direction of the arrows XI-XI in Figure 10.

### DESCRIPTION OF THE PREFERRED EMBODIMENT

All the embodiments of the flowerpot shown are especially intended for use in forcing plants while using automatic watering. The pot consists of a shell 10, the upper edge of which constitutes a rim shoulder 12, and the lower edge of which continues in a substantially plane, horizontal bottom 14. Supporting legs 16 are situated on the lower side of the bottom 14, distributed along the latter's outer circumferential edge.

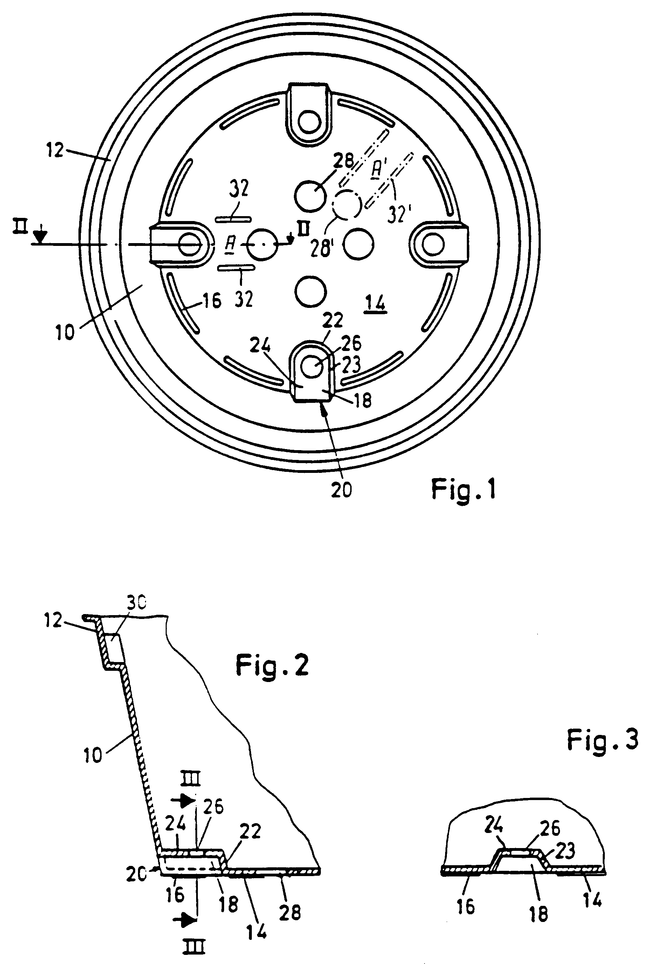

In the embodiment shown in Figure 1, the bottom 14 comprises a number of downwardly open channels 18, each extending from a laterally-facing opening 20 in the lower edge of the shell 10 through a distance transversely to the pot, at its innermost end being closed by an end wall 22. The channels 18 have a trapezoidal sectional shape, being defined by upright side walls 23 extending inwardly from the opening 20 and a limiting top wall 24 facing the pot filling and extending parallel to the pot bottom 14 and being provided with passage openings 26 for water at a level above the pot bottom 14.

In the present embodiment, the passage openings 26 are circular in shape, and there is one opening for each channel 18. The passage openings may, however, be differently shaped, e.g. elongated, and likewise, there may be more than one passage opening for each channel.

In the pot bottom 14 proper, other passage openings 28 are provided, and as will be seen from Figure 2, these openings 28 are barred from direct communication with the passage openings 26 by the walls of the channel 18. When the pot is intended for use with bottom watering, the pot is placed with the bottom 14 on a watering mat, and in this case the supply of liquid to the pot filling will occur through the passage openings 28. At the same time the passage openings 26 will act as ventilating holes.

If the pot is used in connection with the flood/ebb principle, the passage openings 26 will in the "flood" state function to supply liquid to the pot filling, and in the "ebb" state function for removing water from the pot filling, subsequently for ventilating the lowermost part of the pot. This effect may to some extent be supplemented by the passage openings 28 in the bottom 14.

The supporting legs 16 are in the form of ribs of circular-arc shape, and the channels 18 with their access openings 20 are situated between the oppositely facing ends of two neibouring ribs, cf. Figure 1. The supporting legs 16 are so low as not to prevent the pot bottom 14 from engaging a watering mat in a manner allowing the transfer of liquid when the pot is used for bottom watering as described above.

The inside of the rim shoulder 12 is provided with spacing projections 30, preventing the pots from nesting too closely within another, when a number of pots are stacked on top of each other, as the rim shoulder 12 of an upper pot will rest on the projections 30 on a lower pot.

In addition to the supporting legs 16, corresponding further supporting legs 32 are placed on the pot bottom 14, said legs 32 between them defining a section A of the pot bottom 14, said section with one end facing a part of the edge of an opening 28 and embracing the part of the edge of the opening (28) facing towards said section A, and with its opposite end facing the end wall 22 in the channel 18. In this manner this opening 28 together with the opening 26 belonging to the channel 18 may be considered as a pair of mutually associated openings. The section A constitutes a passage, along which seepage of water in and out through the opening 28 is promoted.

Further, another embodiment is indicated in broken line, this embodiment comprising supporting legs 32' defining a section A', one end of which faces an opening 28', and the opposite end faces a free sector of the outer circumferential edge of the pot bottom 14 between two neighbouring legs 16.

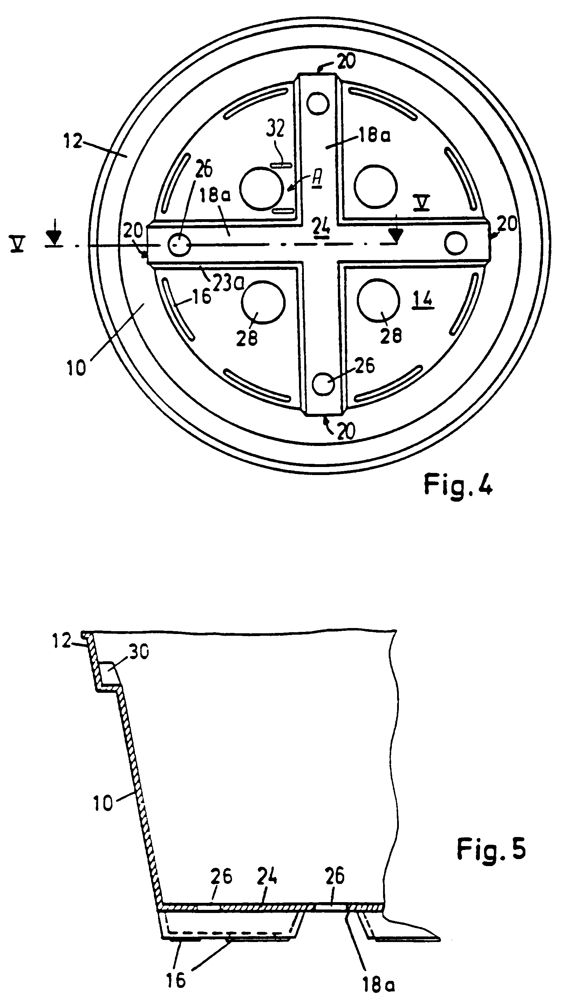

The embodiment shown in Figure 4 differs from the one shown in Figure 1 by, instead of channels 18 with a limited radial length, having transversely through-going channels 18a, in the embodiment shown extending along diameters below the pot bottom 14 and defined by diametrically extending upright side walls 23a and a limiting top wall 24 facing the pot filling. The channels 18a comprise an access opening 20 at each end.

In this embodiment, the section A is limited by supporting legs 32 extending between an opening 28 and a side wall of a channel, in this embodiment the channel 18a. In all other respects, this embodiment corresponds to the one shown in and described with reference to Figures 1-3.

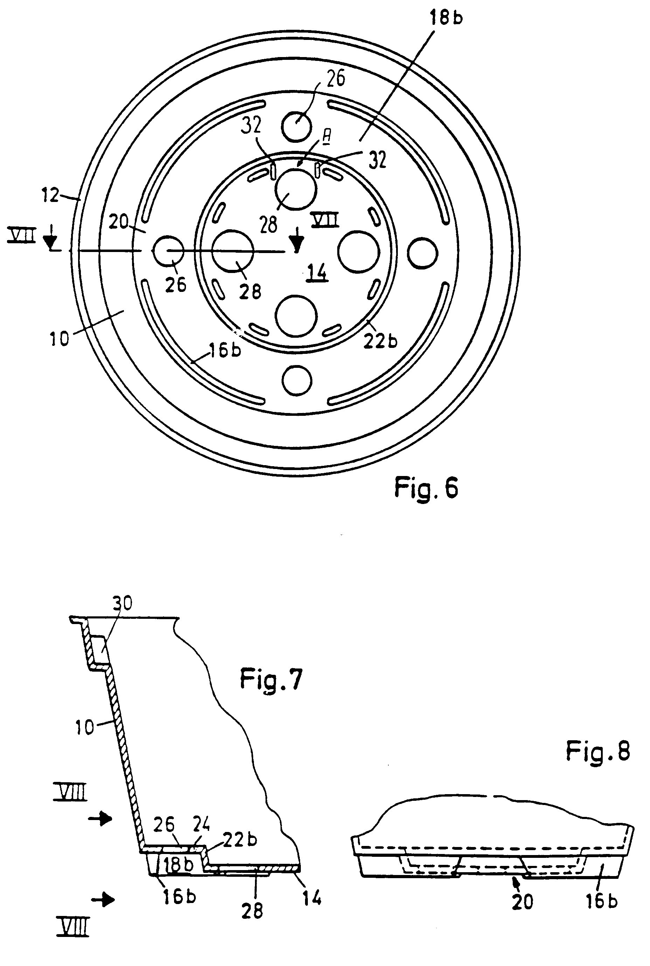

The embodiment shown in Figure 6 differs from both the one shown in Figure 1 and the one shown in Figure 4 by, instead of transversely extending channels 18 or 18a, having a kind of annular channel 18b, internally defined by a circumferential limiting wall 22b, defining the channel relative to the pot bottom 14 with its passage openings 28, and externally defined by ribs 16b in the form of circular arcs forming supporting legs for the pot. The oppositely facing ends of two neighbouring ribs 16b constitute the lateral limits for the laterally-facing openings 20 constituting the access openings to the channel 18b. As shown in Figure 7, this channel also has a trapezoidal cross-sectional shape and passage openings 26 situated in the top wall 24 of the channel.

The section A defined by supporting ribs 32 extends between an opening 28 and a free part of the edge of the pot bottom 14. In this embodiment also, said opening 28 can be considered as constituting one of the parts in a pair of openings, the other part of which, i.e. an opening 26, is situated outwardly of the section A. Further, the opening 26 is situated immediately inwardly of an opening 20. In all other respects, the same remarks apply to this embodiment as those applying to Figures 1-3. This means that the ribs 16b acting as supporting legs are so low, that even with the present embodiment, they do not prevent the pot bottom 14 from engaging a watering mat in a liquid-transferring manner.

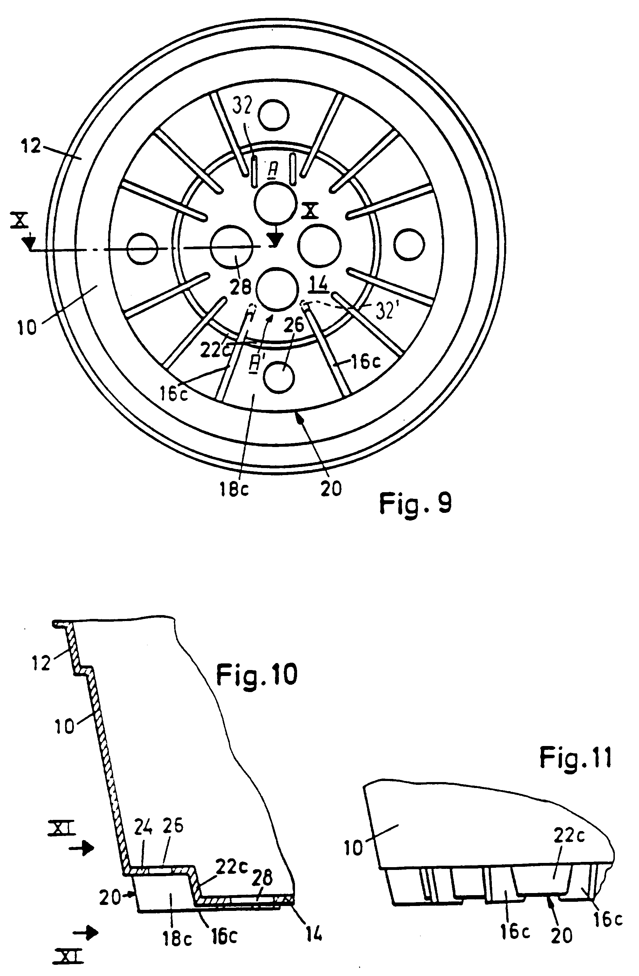

From the three embodiments referred to above, the one shown in Figure 9 differs in that ribs 16c constituting supporting legs constitute both the lateral limits for the channels 18c, the supporting legs being formed by a number of transverse ribs 16c distributed along the periphery of the pot and in the embodiment shown placed as radial ribs. Two such ribs together constitute upright side walls for a channel 18c, and as shown in the drawing, at least in some of the top walls of these channels, passage openings 26 are situated. Like the channels 18, the channels 18c are closed at their innermost end by an end wall 22c.

Two embodiments are shown in Figure 9. The embodiment shown in full line corresponds to the one likewise shown in full line in Figure 1. In the embodiment shown in broken line, the section A' being a further embodiment of the invention is formed by supporting ribs 32' constituting extensions of the transverse ribs 16c. Apart from this, the rim shoulder 12 is not provided with spacing projections 30 as shown in Figure 1, as the supporting legs 16c may in addition constitute distance elements between two pots nested in each other; the supporting legs 16c on the upper pot resting on the top wall of the channel part 18c of the lower pot.

In all other respects, the same remarks apply to this embodiment as those applying to Figures 1-3, this again implying that the ribs 16c acting as supporting legs do not prevent the pot bottom 14 from engaging a watering mat in a liquid-transferring manner.

## Claims

1. Flowerpot, especially for forcing plants while using automatic watering, comprising
a) a pot shell (10),
b) a substantially horizontal bottom (14) having
b1) at least one first opening (28) formed therein, and
b2) at least one channel (18, 18a, 18b, 18c) situated therein and open downwardly and comprising a plane top wall (24) at a higher level than the bottom (14) and having at least one second opening (26), whereas
c) the pot shell (10) is provided with at least one opening (20) constituting an inlet opening to and an outlet opening from the channel (18, 18a, 18b, 18c), and whereas
d) supporting legs (16) are placed on the lower side of the pot bottom along the outer circumferential edge thereof,
characterized by
e) at least one pair of further supporting legs (32) protruding side by side downwardly from the lower surface of the pot bottom (14) and between them defining at least one section (A) of the pot bottom (14), with one end of said section (A) facing a part of the edge of said at least one first opening (28) and embracing the part of the edge of the first opening (28) facing towards said section A, the other end of said section (A) facing a part of the outer circumferential edge of the pot bottom (14) and/or a side wall of at least one channel (18).

2. Flowerpot according to claim 1, characterized in that at least one first opening (28) and one second opening (26) together constitute a mutually associated pair of openings, between the mutually oppositely facing edge parts of which said section (A) of the pot bottom (14) extends.

3. Flowerpot according to claim 1, characterized in that the additional supporting legs (32) are situated as extensions of supporting ribs (16c) constituting lateral limiting walls for the channel (18c).

## Patentansprüche

1. Blumentopf, insbesondere zum Züchten von Pflanzen bei Verwendung einer automatischen Bewässerung, umfassend
a) einen Topfmantel (10),
b) einen im wesentlichen horizontalen Boden (14) mit
b1) wenigstens einer darin gebildeten ersten Öffnung (28) und
b2) wenigstens einem Kanal (18, 18a, 18b, 18c), der sich in diesem befindet und nach unten offen ist und eine ebene obere Wand (24) auf einem höheren Niveau als der Boden (14) umfaßt und mit wenigstens einer zweiten Öffnung (26), wobei
c) der Topfmantel (10) mit wenigstens einer Öffnung (20) versehen ist, die eine Einlaßöffnung zu und eine Auslaßöffnung aus dem Kanal (18, 18a, 18b, 18c) bildet und wobei
d) Stützfüße (16) auf der unteren Seite des Topfbodens längs dessen Außenumfangsrand angeordnet sind,
**dadurch gekennzeichent,** daß
e) wenigstens ein Paar weiterer Stützfüße (32) nebeneinander von der unteren Fläche des Topfbodens (14) vorsteht und zwischen sich wenigstens einen Abschnitt (A) des Topfbodens (14) festlegt, wobei ein Ende des Abschnitts (A) einem Teil des Rands der wenigstens einen ersten Öffnung (28) zugewandt ist und den Teil des Rands der ersten Öffnung (28) umschließt, der diesem Abschnitt (A) zugewandt ist, wobei das andere Ende des Abschnitts (A) einem Teil des Außenumfangsrands des Topfbodens (14) zugewandt ist und/oder einer Seitenwand wenigstens eines Kanals (18).

2. Blumentopf nach Anspruch 1, **dadurch gekennzeichnet,** daß wenigstens eine erste Öffnung (28) und eine zweite Öffnung (26) zusammen ein einander zugeordnetes Paar von Öffnungen bilden, wobei sich der Abschnitt (A) des Topfbodens (14) zwischen den sich gegenüberliegenden, einander zugewandten Randteilen erstreckt.

3. Blumentopf nach Anspruch 1, **dadurch gekennzeichnet,** daß die zusätzlichen Stützfüße (32) als Verlängerungen von Stützrippen (16c) angeordnet sind, die die seitlichen Begrenzungswände für den Kanal (18c) bilden.

## Revendications

1. Pot de fleurs, spécialement pour faire croître des plantes en utilisant l'arrosage automatique, comprenant:
a) une enveloppe de pot (10),
b) un fond sensiblement horizontal (14), ayant.
b1) au moins une première ouverture (28) formée dans ce fond, et
b2) au moins un canal (18, 18a, 18b, 18c) situé à l'intérieur et ouvert vers le bas et comprenant une paroi plane de sommet (24) à un niveau plus élevé que le fond (14), et ayant au moins une seconde ouverture (26), tandis que
c) l'enveloppe de pot (10) est pourvue d'au moins une ouverture (20) constituant une ouverture d'entrée vers le canal (18, 18a, 18b, 18c) et une ouverture de sortie en provenance de ce canal, et tandis que
d) des jambes de support (16) sont placées sur le côté inférieur du fond du pot le long du bord circonférentiel extérieur de ce pot,
caractérisé en ce que :
e) au moins une paire d'autres jambes de support (32) faisant saillie côte à côte vers le bas depuis la surface inférieure du fond du pot (14) et définissant entre elles au moins une section A du fond du pot (14), avec une extrémité de ladite section (A) faisant face à une partie du bord de ladite au moins une première ouverture (28) et renfermant la partie du bord de la première ouverture (28) faisant face vers ladite section (A), l'autre extrémité de ladite section (A) faisant face à une partie du bord circonférentiel extérieur du fond du pot (14) et/ou à une paroi latérale d'au moins un canal (18).

2. Pot de fleurs selon la revendication 1, caractérisé en ce que au moins une première ouverture (28) et une seconde ouverture (26) constituent ensemble une paire d'ouvertures mutuellement associées, ladite section (A) du fond du pot (14) s'étendant entre les partie de bord se faisant face de façon mutuellement opposée.

3. Pot de fleurs selon la revendication 1, caractérisé en ce que les jambes de support additionnelles (32) sont situées comme étant des extension de nervures de support (16c) consituant des parois latérales de limitation pour le canal (18c).
